# EUROPÄISCHE PATENTSCHRIFT

(11) **EP 0 774 128 B1**
(45) Veröffentlichungstag und Bekanntmachung des Hinweises auf die Patenterteilung: **30.09.1998**
(21) Anmeldenummer: 95927634.6
(22) Anmeldetag: 27.07.1995
(51) Int. Cl.: G02B 6/26

(54) **OPTISCHER KURZSCHLUSSSTECKER**
OPTICAL SHORT-CIRCUIT PLUG
PRISE MALE DE COURT-CIRCUIT OPTIQUE

(30) Priorität: 04.08.1994 DE 4428855
(43) Veröffentlichungstag der Anmeldung: 21.05.1997
(73) Patentinhaber: SIEMENS AKTIENGESELLSCHAFT, 80333 München (DE)
(72) Erfinder: BEIER, Axel, D-13158 Berlin (DE)
(86) Internationale Anmeldenummer: DE9501027
(87) Internationale Veröffentlichungsnummer: WO9604578

(56) Entgegenhaltungen:
- US-A- 4 592 798
- US-A- 5 039 456
- US-A- 5 222 165
- PATENT ABSTRACTS OF JAPAN vol. 11 no. 40 (P-544) ,5.Februar 1987 & JP,A,61 209407 (HITACH CHEM CO LTD) 17.September 1986,

## Beschreibung

Die Erfindung liegt auf dem Gebiet optischer Kurzschlußstecker, die insbesondere für die Diagnose und/oder einen Selbsttest von optischen Einrichtungen (z. B. Sende/Empfangsmodule (Transceiver) oder optische Kabel) vor oder nach ihrer Installation verwendet werden. Ein Kurzschlußstecker kann eine beabsichtigte, bedarfsweise verstellbare optische Dämpfung verursachen. Eine weitere Funktion von Kurzschlußsteckern besteht im Schutz optischer Einrichtungen gegen äußere Einflüsse, insbesondere während des Transports und der Installation.

Die Erfindung betrifft einen optischen Kurzschlußstecker zum Kurzschließen zweier optischer Einheiten, insbesondere der Sende- und Empfangseinheit eines Sende/Empfangsmoduls, mit einem Kurzschlußlichtwellenleiter und mit zwei als separate Elemente ausgebildeten Steckerstiften, die jeweils ein Ende des Kurzschlußlichtwellenleiters zur Ankopplung an die optischen Einheiten aufnehmen.

Ein aus der US-PS 5,076,688 bekannter Kurzschlußstecker umfaßt einen Kurzschlußlichtwellenleiter und ein massives Kunststoffgehäuse, das durch vollständiges Umspritzen des Kurzschlußlichtwellenleiters in einem einzigen Spritzvorgang gebildet ist. Die Kurzschlußlichtwellenleiterenden aufnehmende Steckerstifte sind dabei als integrale Bestandteile des Kunststoffgehäuses ausgebildet. Zum Schutz gegen das Spritzgußmaterial muß der Kurzschlußlichtwellenleiter von einer mehrlagigen Metallschutzschicht umgeben sein. Der Kurzschlußstecker ist einem an den Transceiver im Normalbetrieb ankoppelbaren Verbindungsstecker nachgebildet.
Der Kurzschlußstecker ist vergleichsweise aufwendig und erfordert durch das massive Gehäuse relativ viel Spritzgußmasse. Darüber hinaus ist der Abstand der Steckerstifte fest vorgegeben und unflexibel mangels definierter Anpreßkräfte der Steckerstifte sind die Ankopplungsverhaltnisse nur vergleichsweise ungenau reproduzierbar.

Aus der US-PS 4,952,798 und US-PS 4,982,083 sind im Hinblick auf die letztgenannte Problematik verbesserte Kurzschlußstecker der eingangs genannten Art bekannt, bei denen die Enden eines Kurzschlußlichtwellenleiters zur Ankopplung an die optischen Einheiten jeweils von einem als separates Element ausgebildeten Steckerstift aufgenommen sind. Im mittleren Bereich weisen die Steckerstifte jeweils einen axial verschieblichen Flansch auf, an dem sich jeweils eine Schraubenfeder abstützt. Mit ihrem anderen Ende liegt jede Schraubenfeder an einer jeweils an dem rückwärtigen Ende des Steckerstiftes fixierten Scheibe an. Durch diese Konstruktion sind die einzelnen Steckerstifte entgegen der jeweiligen Schraubenfederkraft axial verschieblich gelagert. Zum Ausgleich von Toleranzen bezüglich ihres radialen Abstandes können die Steckerstifte um ihren mittleren Bereich eine Kippbewegung ausführen.

Diese bekannten Kurzschlußstecker erfordern hinsichtlich ihrer Federeigenschaften vergleichsweise präzise zu fertigende und als Schüttgut aufwendig zu handhabende Schraubenfedern. Der Ausgleich radialer Abstandstoleranzen führt aufgrund der Kippbewegung zu einer inhomogenen Belastung und Schrägstellung der Steckerstifte. Die Aufgabe der Erfindung liegt daher in der Schaffung eines Kurzschlußsteckers, der bei einfachem und leichtem Aufbau definierte und reproduzierbare Kopplungseigenschaften hat.

Diese Aufgabe wird erfindungsgemäß bei einem Kurzschlußstecker der eingangs genannten Art dadurch gelöst, daß die Steckerstifte jeweils zumindest teilweise von einer Hülse aus elastischem Material umgeben und unter elastischer Verformung der Hülse verschieblich gelagert sind. Die als separate Elemente ausgebildeten Steckerstifte können in einem gemeinsamen (Duplex-Stecker) oder in individuellen (SC-Einzel-Stecker) Gehäusen zur Erzeugung eines definierten Anpreßdrucks entgegen der Verformungskraft der elastischen Hülse verschiebbar gelagert sein. Zum Toleranzausgleich des Steckerstiftachsabstands können die Steckerstifte aufgrund der elastischen Hülseneigenschaften auch radial verschiebbar sein. Der erfindungsgemäße Kurzschlußstecker gewährleistet dadurch reproduzierbare Koppelverhältnisse und in seiner Funktion als Schutz der optischen Einheiten eine zuverlässige Abdeckung der empfindlichen Oberflächen der Einheiten.

Eine vorteilhafte Weiterbildung der Erfindung sieht vor, daß die Hülse axial geschlitzt ist. Dadurch läßt sich die Hülse aufweiten und auch nachträglich, d. h. wenn der Kurzschlußwellenleiter bereits beidseitig mit Steckerstiften versehen ist, auf den Steckerstift aufschieben.

Eine im Hinblick auf die Langzeitstabilität und die federelastischen Eigenschaften der Hülse vorteilhafte Ausgestaltung der Erfindung sieht vor, daß die Hülse aus Silikon besteht.

Die Erfindung wird nachfolgend anhand einer Zeichnung näher erläutert; es zeigen:
- Figur 1: ein Ausführungsbeispiel eines erfindungsgemäßen Kurzschlußsteckers,
- Figur 2: einen Steckerstift und die
- Figuren 3A und 3B: Hülsen aus elastischem Material.

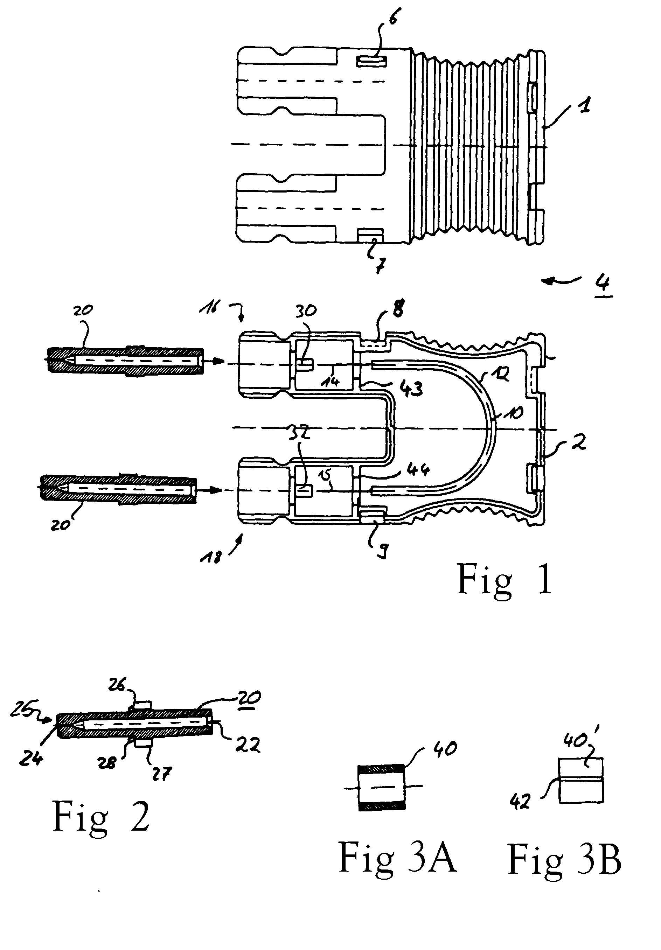

Figur 1 zeigt einen Kurzschlußstecker, der beispielsweise in der in der US-PS 5,076,688 beschriebenen Weise zum Selbsttest und zur Diagnose optischer Einrichtungen (z. B. eines Transceivers oder optischen Kabels) und zum Schutz für optische Einheiten verwendet werden kann. In Figur 1 ist das aus zwei gleichen Teilen 1, 2 bestehende Gehäuse 4 des Kurzschlußsteckers geöffnet dargestellt. Das Oberteil 1 enthält Rastelemente 6, 7, die beim Zusammenfügen des Gehäuses 4 an entsprechenden Stellen 8, 9 des Unterteils 2 einrasten. In dem Gehäuse 4 verläuft ein Kurzschlußlichtwellenleiter 10 mit einem äußeren, ggf. die Dämpfung mitbestimmenden Mantel 12, dessen freie Enden 14, 15 von jeweils einem Steckerstift (s. Figur 2) aufgenommen werden. Das Gehäuse ist gewichts- und materialsparend hohl ausgestaltet und mit stirnseitigen Kopplungsbuchten 16, 18 zur Ankopplung an ein nicht dargestelltes Sende/Empfangsmodul (Transceiver) anstelle eines betriebsgemäß anzukoppelnden Steckers in der in der US-PS 5,067,688 beschriebenen Weise ausgebildet.

Figur 2 zeigt im Schnitt einen Steckerstift 20 mit einer axialen Bohrung 22, deren Durchmesser auf den Durchmesser des Mantels 12 (Figur 1) abgestimmt ist und sich stirnseitig annähernd auf den Durchmesser der abgemantelten Enden 14, 15 des Kurzschlußlichtwellenleiters 10 (Figur 1) verjüngt. Die Enden 14, 15 und der Mantel 12 werden in jeweils einen der dargestellten Steckerstifte 20 (wie in Figur 1 angedeutet) derart eingeführt, daß die kopplungsseitigen Endflächen der Enden 14, 15 jeweils an der Stirnfläche 25 des Steckerstifts 20 enden. Bedarfsweise kann die Stirnfläche bzw. die Endfläche optisch vergütet werden. Der Steckerstift weist radiale Vorsprünge 26, 27 auf, die einerseits zur Führung in entsprechenden Schlitzen 30 oder 32 des Gehäuses 4 dienen und andererseits eine Abstützung für eine hohlzylindrische, elastische Hülse 40 (Figur 3A) bilden. Die Hülse 40 besteht aus Silikon und ist über das rückwärtige Ende des Steckerstifts 20 aufschiebbar. In einer bevorzugten Ausgestaltung kann die Hülse 40' (Figur 3B) einen axial verlaufenden Schlitz 42 aufweisen, so daß die Hülse 40' zur Montage aufgeweitet und über den Steckerstift 20 bzw. den Mantel 12 radial aufgeschoben werden kann, wenn der Kurzschlußlichtwellenleiter 10 bereits beidseitig mit Steckerstiften 20 versehen ist. Von der Stirnseite 25 des Steckerstifts 20 kann ein Dichtring 28 bis zum Anschlag an die Vorsprünge 26, 27 aufgeschoben sein, um eine zuverlässige Abdichtung gegen Staub und Gase zu gewährleisten.

Im fertig montierten Kurzschlußstecker befindet sich demgemäß an den Enden 14, 15 des Kurzschlußlichtwellenleiters 10 jeweils ein Steckerstift 20, der durch die federelastischen Eigenschaften der Hülse 40 in axialer Richtung entgegen der Federkraft der Hülse 40 in das Gehäuse 4 zurück verschieblich ist. Die Hülse stützt sich dazu an Rippen 43, 44 des Gehäuses 4 ab. Dadurch übt die Stirnfläche 25 auf die jeweils anzukoppelnde (nicht dargestellte) optische Einheit einen definierten Anpreßdruck aus, so daß reproduzierbare Kopplungsverhältnisse gewährleistet sind. Darüber hinaus gewährleistet der Anpreßdruck eine feste und vor äußeren Beschädigungen und Einflüssen schützende Abdeckung der empfindlichen wirksamen Bereiche der optischen Einheit. Die elastische Hülse erlaubt darüber hinaus eine radiale Verschieblichkeit des Steckerstiftes 20 in einem beispielsweise durch die Dimensionierung der Vorsprünge 26, 27 und die korrespondierenden Aufnahmen 30, 32 festlegbaren Toleranzbereich.

Obwohl im gezeigten Ausführungsbeispiel beide Steckerstifte in einem gemeinsamen Gehäuse 4 gelagert sind (Duplex-Stekker), ist die vorliegende Erfindung genauso vorteilhaft auf die Ausgestaltung von Einzelsteckern anwendbar. In diesem Fall ist jeweils ein Steckerstift entgegen der Federkraft seiner Hülse in einem individuellen Gehäuse (Simplex-Stecker) gelagert. Bevorzugt können die Gehäuse von zwei Simplex-Stekkern über eine gemeinsame Halterung oder Klammer in an sich bekannter Weise zu einem Doppelstecker zusammengefaßt werden.

## Patentansprüche

1. Optischer Kurzschlußstecker zum Kurzschließen zweier optischer Einheiten, insbesondere der Sende- und Empfangseinheit eines Sende/Empfangsmoduls,
mit einem Kurzschlußlichtwellenleiter (10)
und mit zwei als separate Elemente ausgebildeten Steckerstiften (20), die jeweils ein Ende (14, 15) des Kurzschlußlichtwellenleiters (10) zur Ankopplung an die optischen Einheiten aufnehmen,
**dadurch gekennzeichnet, daß**
die Steckerstifte (20)
- jeweils zumindest teilweise von einer Hülse (40) aus elastischem Material umgeben und
- unter elastischer Verformung der jeweiligen Hülse (40) verschieblich gelagert sind.

2. Optischer Kurzschlußstecker nach Anspruch 1, **dadurch gekennzeichnet, daß** die Hülse (40) axial geschlitzt ist.

3. Optischer Kurzschlußstecker nach Anspruch 1 oder 2, **dadurch gekennzeichnet, daß** die Hülse (40) aus Silikon besteht.

## Claims

1. Optical short-circuiting plug for short-circuiting two optical units, in particular the transmitting and receiving units of a transceiver,
comprising a short-circuiting optical waveguide (10)
and comprising two plug pins (20) constructed as separate elements which each receive one end (14, 15) of the short-circuiting optical waveguide (10) with a view to coupling onto the optical units,
characterised in that
the plug pins (20)
- are each at least partially surrounded by a sleeve (40) made of elastic material and
- are displaceably supported subject to elastic deformation of the respective sleeve (40).

2. Optical short-circuiting plug according to Claim 1,
characterised in that
the sleeve (40) is axially slotted.

3. Optical short-circuiting plug according to Claim 1 or 2,
characterised in that
the sleeve (40) consists of silicone.

## Revendications

1. Fiche de court-circuit optique pour court-circuiter deux unités optiques, notamment l'unité d'émission et de réception d'un module émetteur/récepteur, comprenant
un conducteur optique de court-circuit (10),
et deux broches de connexion (20) réalisées sous forme d'éléments séparés, qui reçoivent chacune une extrémité (14, 15) du conducteur optique de court-circuit (10) en vue de l'accouplement aux unités optiques,
**caractérisée** en ce que les broches de connexion (20)
- sont chacune entourées au moins partiellement par un manchon (40) en matériau élastique,
- et sont montées à coulissement avec déformation élastique du manchon respectif (40).

2. Fiche de court-circuit optique selon la revendication 1, **caractérisée** en ce que le manchon (40) est axialement fendu.

3. Fiche de court-circuit optique selon la revendication 1 ou 2, **caractérisée** en ce que le manchon (40) est réalisé en silicone.
